# EUROPEAN PATENT APPLICATION

(11) **EP 1 669 997 A1**
(43) Date of publication of application: **14.06.2006**
(21) Application number: 05027201.2
(22) Date of filing: 13.12.2005
(51) Int. Cl.: G11B 27/034, G11B 27/34, G11B 27/32

(54) **Editing apparatus, editing method and editing program**

(30) Priority: 13.12.2004 JP 2004360457
(71) Applicant: SONY CORPORATION, Tokyo (JP)
(72) Inventor: Iida, Kenichi, Tokyo (JP); Tanaka, Izuru, Tokyo (JP); Shikai, Hiroyuki, Tokyo (JP); Sano, Harumi, Tokyo (JP); Kameda, Nobushi, Tokyo (JP); Kaneko, Minoru, Yokohama-shi Kanagawa (JP); Okuda, Naoto, Yokohama-shi Kanagawa (JP)
(74) Representative: Melzer, Wolfgang

(57) **Abstract**

An editing apparatus, an editing method and an editing program can remarkably improve the operability. A first reproduction slider bar 122 that indicates the current position of reproduction of sound information and a reduced image R are displayed on a display 62, the reduced image R being obtained by reducing the image size of a bookmark image to a predetermined size and arranged at a sound position (time code position) related with the bookmark image. The reduced image R is moved in response to an operation of moving it along the first reproduction slider bar 122.

## Description

### CROSS REFERENCE TO RELATED APPLICATIONS

The present invention contains subject matter related to Japanese Patent Application JP2004-360457 filed in the Japanese Patent Office on December, 13, 2004, the entire contents of which being incorporated herein by reference.

### BACKGROUND OF THE INVENTION

### FIELD OF THE INVENTION

This invention relates to an editing apparatus, an editing method and an editing program. More particularly, the present invention can suitably be applied to an editing apparatus for editing management information to be used for managing the sound positions of image information that is related with specified sound positions of sound information.

### DESCRIPTION OF THE RELATED ART

IC recorders are known as portable type sound storage apparatus. An IC recorder collects external sounds by means of the microphone it contains, processes the obtained audio data for compression coding and stores the processed data in a semiconductor memory it also contains or in a mounted external memory.

Since such IC recorders are conveniently portable because they are compact and lightweight, they have been and being used in business scenes such as meetings and also find applications in the field of sound recording appliances for personal use.

The applicant of the present application has proposed an IC recorder equipped with a charge coupled device (CCD) camera [Jpn. Pat. Appln. No. 2004-256199]. With this arrangement, while recording sounds by means of the IC recorder, the image information of the image picked up by the CCD camera can be related with the sound positions of the recorded sound and stored in the IC recorder. Then, the sound position of the desired sound can be accessed with ease by referring to the image anytime thereafter.

### SUMMARY OF THE INVENTION

Meanwhile, an IC recorder is usually packaged with a compact disk - read only memory (CD-ROM) storing application software having features that allow the user to reproduce and edit the audio files of recorded sounds stored in the IC recorder and the image information related with the audio files.

Then, the user can display a predetermined graphical user interface (to be referred to simply as GUI hereinafter) on the display screen of his or her own personal computer by installing and starting the application software in the computer. Thus, the user can edit the sound positions of the image information related with the audio files of the recorded sounds that are stored in the IC recorder by way of the personal computer and a cable, using the GUI.

However, the sound positions in the image information that is related with the audio files of the recorded sounds and stored in the IC recorder are often slightly displaced from the sound positions that the user wants because of the timing of picking up an image by means of the CCD camera. Thus, there is a strong demand for an arrangement that can correct the slight displacement with ease when editing the sound positions on a personal computer in order to grasp the relations between the sounds and the images that operate as markings for the sounds.

In view of the above-identified circumstances, the present invention intends to provide an editing apparatus, an editing method and an editing program that improve the level of operability for the user.

According to the present invention, there provided is an editing apparatus for editing management information for managing a sound position of at least one image each related with a specified sound position of sound information. This editing apparatus include: a generation unit for modifying a size of an image to a prescribed image size to generate a modified image; a display unit for displaying a slider bar indicating a current reproducing position of the sound information and the modified image at the specified sound position along the slider bar; an input unit for inputting an operation to move the modified image along the slider bar, the modified image being displayed by the display unit; and an update unit for updating the management information by changing the specified sound position of the image to a new sound position of the sound information related with the modified image, in which the display unit is adapted to move the modified image in response to the operation.

Thus, with an editing apparatus according to the invention, a modified image can be used not only as marking but also as editing point, the user can move it to the target sound position in an intuitive and easy manner if compared with the operation of moving an icon.

Further, according to the present invention, there provided is an editing method for editing management information for managing a sound position of at least one image each related with a specified sound positions of sound information. This method includes: a first step of modifying a size of an image to a prescribed image size to generate a modified image; a second step of displaying a slider bar indicating a current reproducing position of the sound information and the modified image at the specified sound position along the slider bar; and a third step of inputting an operation to move the modified image being displayed, and updating the management information by changing the specified sound position of the image to a new sound position of the sound information related with the modified image, in which the second step is adapted to move the modified image in response to the operation.

Thus, with an editing method according to the invention, a modified image can be used not only as marking but also as editing point, the user can move it to the target sound position in an intuitive and easy manner if compared with the operation of moving an icon.

Furthermore, according to the present invention, there is provided an editing program for editing management information for managing a sound position of at least one image each related with a specified sound positions of sound information, the program causes a computer to execute: a first process of modifying a size of the image to a prescribed image size to generate a modified image; a second step of displaying a slider bar indicating a current reproducing position of the sound information and the modified image at the specified sound position along the slider bar; and a third step of inputting an operation to move the modified image being displayed, and updating the management information by changing the specified sound position of the image to a new sound position of the sound information related with the modified image, in which the second process is adapted to move the modified image in response to the operation.

Thus, with an editing program according to the invention, a modified image can be used not only as marking but also as editing point, the user can move it to the target sound position in an intuitive and easy manner if compared with the operation of moving an icon.

Thus, the present invention provides an editing apparatus, an editing method and an editing program adapted to display a slider bar indicating the current sound information reproducing position and also the modified image obtained by modifying the size of the image related with the sound position along the slider bar and move the modified image in response to the operation of moving it along the slider bar. Therefore, the modified image can be used not only as marking but also as editing point so that the user can move it to the target sound position in an intuitive and easy manner if compared with the operation of moving an icon. Thus, an editing apparatus, an editing method and an editing program according to the invention provide a remarkably improved operability.

The nature, principle and utility of the invention will become more apparent from the following detailed description when read in conjunction with the accompanying drawings in which like parts are designate dy like reference numerals or characters.

### BRIEF DESCRIPTION OF THE DRAWINGS

In the accompanying drawings:
FIG. 1 is a schematic perspective view, or perspective view (1), of a camera-equipped IC recorder realized by applying an embodiment of the present invention, showing the external configuration thereof;
FIG. 2 is another schematic perspective view, or perspective view (2) of the camera-equipped IC recorder of FIG. 1, showing the external configuration thereof;
FIG. 3 is still another schematic perspective view, or perspective view (3), of the camera-equipped IC recorder of FIG. 1, showing the external configuration thereof;
FIG. 4 is a schematic block diagram of the camera-equipped IC recorder of FIG. 1, showing the internal configuration thereof;
FIG. 5 is a schematic view of the matters-of-concern folder selection image of the embodiment, showings its configuration;
FIG. 6 is a schematic illustration of the directory structure of the Voiscape Format that is adopted in the embodiment;
FIG. 7 is a schematic illustration of the data structure of a matters-of-concern folder management file that can be used for the embodiment;
FIG. 8 is a schematic illustration of the data structure of an image management file that can be used for the embodiment;
FIG. 9 is a schematic illustration of the configuration of the matters-of-concern file editing system of this embodiment;
FIG. 10 is a schematic block diagram of a personal computer that can be used for the embodiment;
FIG. 11 is a schematic view showing the main window 70 of the embodiment;

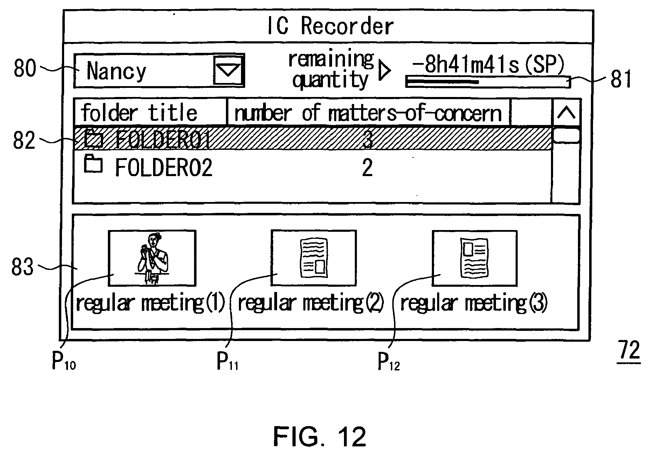

FIG. 12 is a schematic illustration of an alternative arrangement of the IC recorder information display section of the main window 70;
FIG. 13 is a schematic illustration of the enlarged picture window of the main window of the embodiment;
FIGS. 14A and 14B are schematic illustrations of a displayed menu image;
FIG. 15 is a schematic illustration of the editing window of the main window of the embodiment;
FIG. 16 is a schematic illustration of an enlarged reproduction slider bar of the embodiment;
FIG. 17 is a schematic illustration of the operation directing pointer of the embodiment;
FIG. 18 is a schematic illustration of the following operation of the slider;
FIG. 19 is a schematic illustration of the image selection dialog box of the main window 70;
FIG. 20 is a schematic illustration of a reduced bookmark image that is newly displayed in the main window 70; and
FIG. 21 is a flowchart of the editing processing operation of the embodiment.

### DETAILED DESCRIPTION OF THE PREFERRED EMBODIMENTS

Now, the present invention will be described in greater detail by referring to the accompanying drawings that illustrate a preferred embodiment of the invention.

### (1) External configuration of a camera-equipped IC recorder realized by applying the embodiment

### (1-1) External configuration of the camera-equipped IC recorder

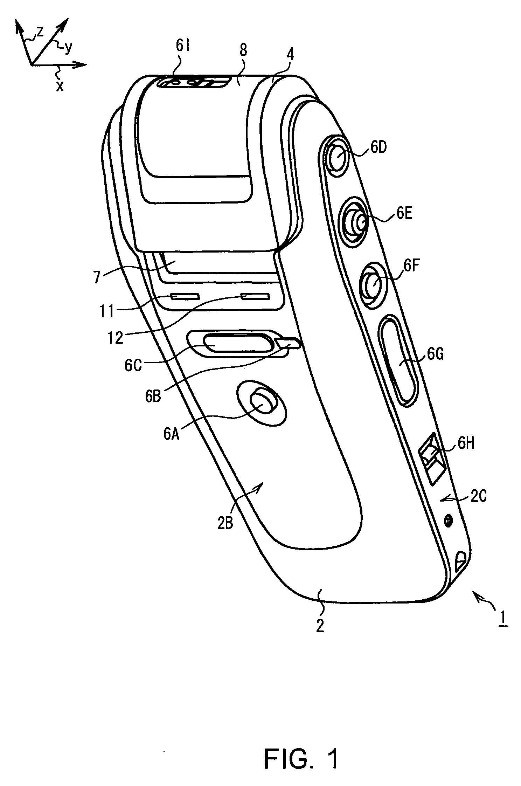

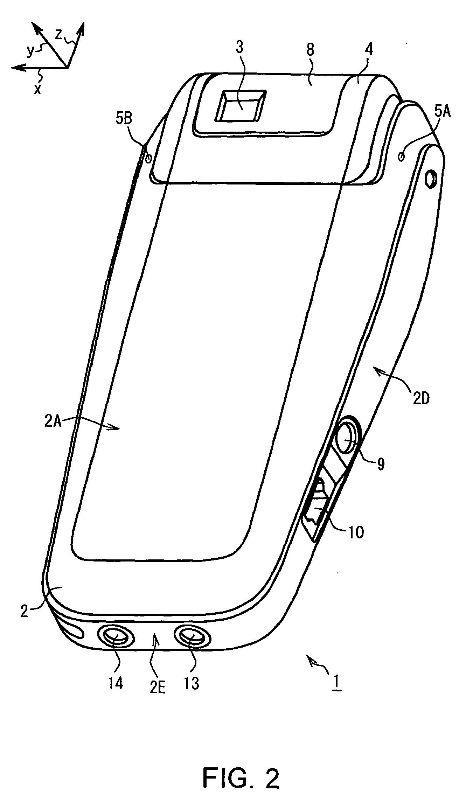

Referring firstly to FIGS. 1 through 3, reference symbol 1 generally denotes a camera-equipped IC recorder realized by applying this embodiment of the present invention. It includes a main body section 2 showing a rounded oblong profile as a whole and an LCD cover section 4 arranged at the top of the main body section 2 so as to be able to slide relative to the main body section 2 and equipped with a charge coupled device (CCD) camera 3.

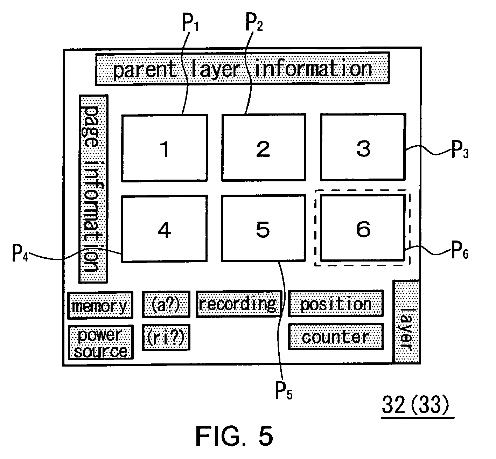

Sound collecting holes 5A, 5B are bored through the main body section 2 at upper lateral sides of the rear surface 2A and microphones 20A, 20B (FIG. 5) are arranged in the insides of the sound collecting holes 5A, 5B respectively so that external sounds are collected by the microphones 20A, 20B byway of the corresponding sound collecting holes 5A, 5B.

A sound recording button 6A is arranged at a middle part of the front surface 2B of the main body section 2. Thus, an operation of recording the external sounds collected by the microphones 20A, 20B can be started when the sound recording button 6A is depressed.

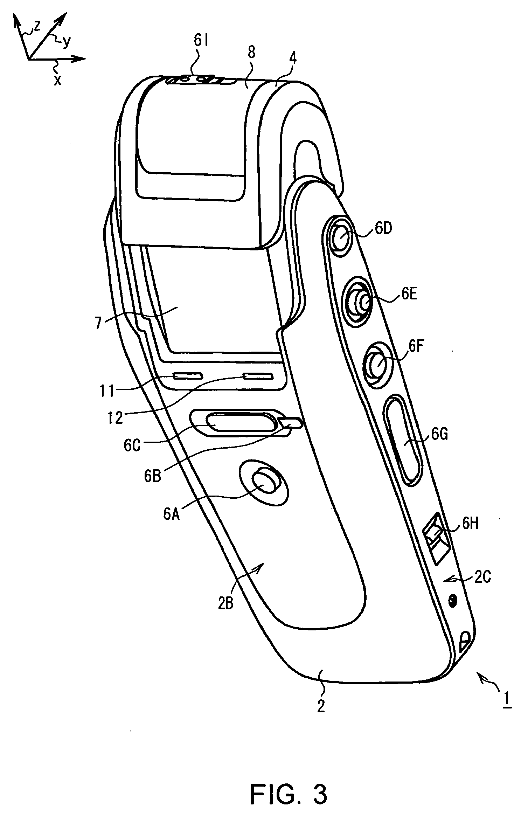

As shown in FIG. 3, a high definition LCD (color liquid crystal display) 7 is arranged at an upper part of the front surface 2B of the main body section 2. The image being picked up by the CCD camera 3 can be displayed on the LCD 7 by pulling up the LCD cover section 4 upward, turning the camera cover 8 of the LCD cover section 4, which will be described in greater detail hereinafter, so as to expose the CCD camera 3 and depressing the live view button 6B arranged below the LCD 7.

A camera shutter button 6C is arranged to the left of the live view button 6B of the main body section 2. Thus, when a moving image is being displayed on the LCD 7, the still image of a frame picked up by the CCD camera 3 at the moment when the camera shutter button 6C is depressed can be taken in and preserved from the moving image being displayed on the LCD 7 by depressing the camera shutter button 6C.

On the other hand, a menu button 6D is arranged on the right lateral surface 2C of the main body section 2. Thus, it is possible for the user to have the LCD 7 display a menu image by depressing the menu button 6D. Additionally, a jog lever 6E is arranged below the menu button 6D on the right lateral surface 2C of the main body section 2. Thus, it is possible for the user to select one of the choices listed in the menu image that the user wants and finalize the selection by tilting the jog lever 6E upward, downward, right or leftward or depressing it.

Still additionally, a stop button 6F is arranged below the job lever 6E on the right lateral surface 2C of main body section 2 and a volume control button 6G is arranged below the stop button 6F. Thus, it is possible for the user to stop the ongoing sound recording operation or the ongoing sound reproducing operation by depressing the stop button 6F. Furthermore, when the embodiment is operating for reproduction, the volume of the reproduced sound being output from the speaker 31 (FIG. 5) arranged at the rear side of the LCD 7 can be raised or reduced by pushing an upper part or a lower part, whichever appropriate, of the volume control button 6G.

A universal serial bus (USB) connector 10 is arranged below the power supply connector 9 on the left lateral surface 2D of the main body section 2 so that the embodiment can be connected to an external appliance such as a personal computer by way of the USB connector 10. With this arrangement, the audio data of recorded sounds and the video data of recorded images that are preserved in the camera-equipped IC recorder 1 can be output to the external appliance connected to it by the USB or the audio data and the video data supplied from the external appliance can be taken in.

On the other hand, a cylindrical camera cover 8 is arranged on the LCD cover section 4 so as to be able to turn freely. The CCD camera 3 is fitted to a predetermined position of the camera cover 8 with its optical axis running in a direction perpendicular to the central axis of the camera cover 8.

With this arrangement of the camera-equipped IC recorder 1, the CCD camera 3 is protected against damages as the camera cover 8 is placed at its original position where the CCD camera 3 faces downward when the CCD camera 3 is not in use, whereas a desired image can be picked up by the CCD camera 3 by turning the camera cover 8 in the direction of arrow a from the original position and moving the CCD camera 3 to the front surface position at the side of the rear surface 2A of the main body section 2, while viewing the moving image being displayed on the LCD 7.

### (1-2) Internal configuration of the camera-equipped IC recorder

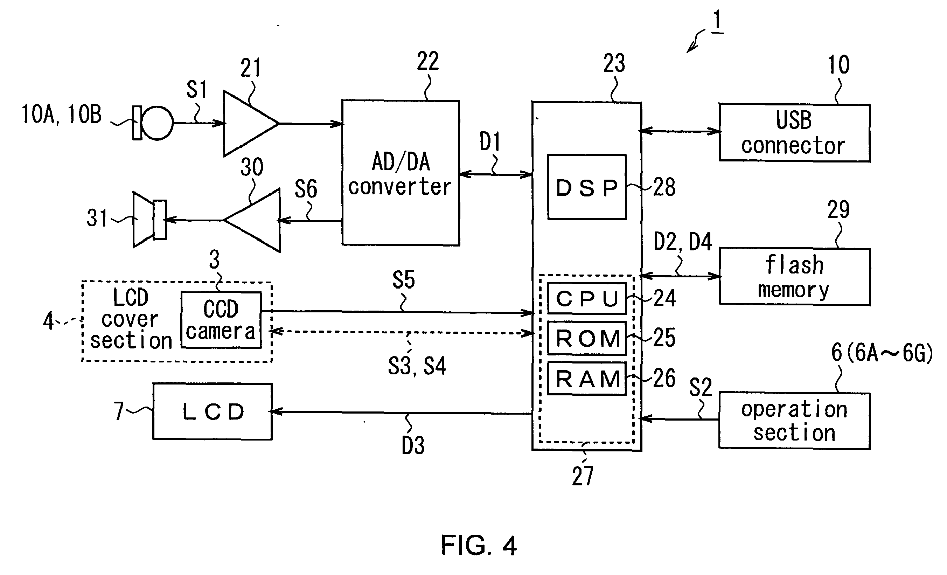

FIG. 4 is a schematic block diagram of the camera-equipped IC recorder 1 of FIG. 1, showing the internal configuration thereof.

As power is supplied to the camera-equipped IC recorder 1, the microphones 20A, 20B collect external sounds and the obtained sound signals S1 are input to an analog/digital (AD) / digital/analog (DA) converter 22 by way of an amplifier 21. The AD/DA converter 22 sequentially converts the sound signals S1 into digital audio data D1 and transmits the obtained audio data D1 sequentially to a data processing/control section 23.

The data processing/control section 23 includes a control section 27 that is a microcomputer having a central processing unit (CPU) 24 that comprehensively controls the entire camera-equipped IC recorder 1, a read only memory (ROM) 25 that stores various computer programs and a random access memory (RAM) 26 that operates as work memory of the CPU 24 and a digital signal processor (DSP) 28 having a data compression/expansion feature for compressing and expanding the audio data D1 and the video data D3, which will be described in greater detail hereinafter.

When any of the sound recording button 6A, the live view button 6B, the camera shutter button 6C, the menu button 6D, the job lever 6E, the stop button 6F and the volume control switch 6G, which constitute the operation section, is operated, a corresponding operation input signal S2 is applied from the operation section 6 (6A through 6G) to the control section 27 of the data processing/control section 23.

Additionally, an LCD cover status signal S3 that indicates either a closed state as shown in FIG. 1 or an open state as shown in FIG. 3 is applied from a first sensor (not shown) arranged in the LCD cover section 4 to the control section 27. Similarly, a camera cover status signal S4 that indicates the rotary state of the camera cover 8, which is either a closed state where the CCD camera 3 is not exposed or an open state where the CCD camera 3 is exposed, is applied from a second sensor (not shown) arranged in the LCD cover section 4 to the control section 27.

Thus, the CPU 24 of the control section 27 recognizes the operation conducted by the user according to the operation input signal S2 and detects the current status of the LCD cover section 4 and that of the camera cover 8 according to the LCD camera cover status signal S3 and the camera cover status signal S4. Then, it performs its control operation according to the recognition and the outcome of detection.

More specifically, when the CPU 24 detects that at least either the LCD cover section 4 or the camera cover 8 is in a closed state and, at the same time, recognizes that the sound recording button 6A is depressed, it shifts the operation mode into a sound recording mode and controls the DSP 28 so as to have it execute a sound compression process conforming to a predetermined sound compression system such as LPEC (trademark of Sony Corporation) on the audio data D1 output from the AD/DA converter 22 and sequentially store the obtained compressed audio data D2 in the flash memory 29 it contains.

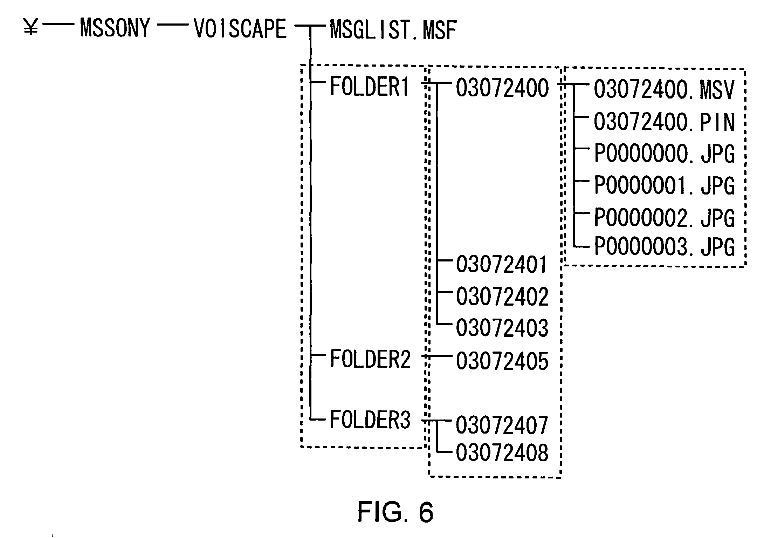

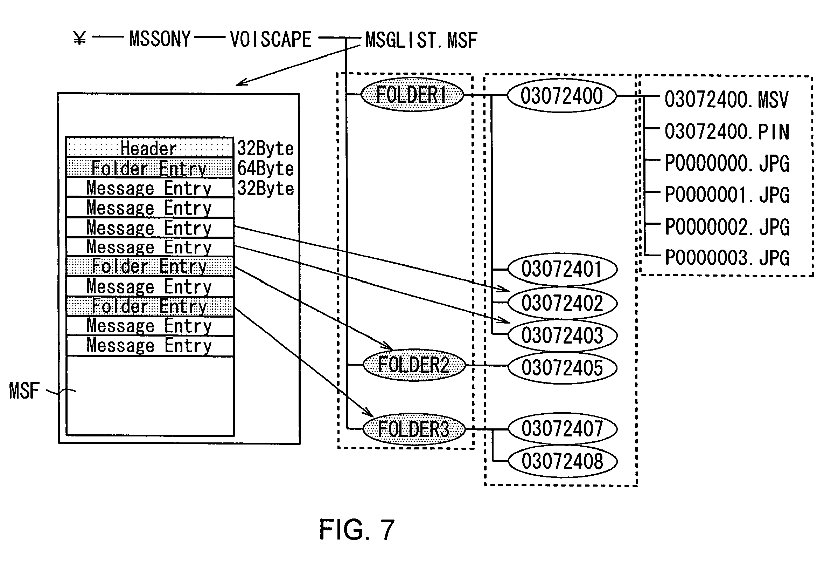

Additionally, when the CPU 24 recognizes that the stop button 6F is depressed subsequently, it controls the DSP 28 so as to have it stop the sound compression process on the audio data D1 being supplied from the AD/DA converter 22 and, at the same time, generates a new matters-of-concern folder ("03072400" through "03072408" in FIG. 6) in the folder ("FOLDER1" through "FOLDER 3" in FIG. 6), which will be described in greater detail hereinafter, that is currently selected by the user to prepare a file of the compressed audio data D2 and contains the obtained audio file ("03072400.MSV" in FIG. 6) in the matters-of-concern folder. Furthermore, the CPU 24 stores the management information on the matters-of-concern folder in a management file MSF (FIG. 7), which will be described in greater detail hereinafter.

On the other hand, when the CPU 24 detects that both the LCD cover section 4 and the camera cover 8 are in an open state, it shifts the operation mode into a camera mode and controls the CCD camera 3 so as to have it start operating. Then, as a result, the video signals S5 of the scene being picked up by the CCD camera 3 are output sequentially from the CCD camera 3 and applied to the data processing/control section 23.

Then, as the CPU 24 recognizes that the live view button 6B is depressed under this condition, it controls the DSP 28 correspondingly. Then, the DSP 28 sequentially converts the video signals S5 given to it from the CCD camera 3 into digital data and transmits the obtained video data D3 to the LCD 7. As a result, the moving image of the scene being picked up by the CCD camera 3 is displayed on the LCD 7 according to the video data D3 on a real time basis.

Furthermore, as the CPU 24 subsequently recognizes that the camera shutter button 6C is depressed under this condition, it controls the DSP 28 correspondingly. Then, the DSP 28 takes in the video data D3 of a still image of a frame picked up at the moment when the camera shutter button 6C is depressed according to the video data D3 and executes an image compression process conforming to a predetermined image compression system such as that of the Joint Photographic Experts Group (JPEG) on the video data D3 it takes in. Then, the CPU 24 stores the obtained compressed video data D4 in the flash memory 29.

Subsequently, the CPU 24 generates a new matters-of-concern folder in the folder selected by the user at that time and stores the video file of the compressed video data D4 ("P0000000.JPG" through "P0000003.JPG" in FIG. 6) in the matters-of-concern folder and then stores management information on the matters-of-concern folder in the management file MSF.

On the other hand, when the CPU 24 recognizes that the sound recording button 6A is depressed under the condition that it detects both the LCD cover section 4 and the camera cover 8 are in an open state, it shifts the operation mode to a sound recording/image recording mode and controls the DSP 28 correspondingly.

At this time, the DSP 28 sequentially executes a sound compression process conforming to a predetermined sound compression system on the audio data D1 given to it from the AD/DA converter 22 and stores the obtained compressed audio data D2 in the flash memory 29 as in an above-described sound recording mode. Additionally, the DSP 28 sequentially converts the video signals S5 given to it from the CCD camera 3 into digital data and transmits the obtained video data D3 to the LCD 7 as in an above-described camera mode. As a result, the moving image of the scene being picked up by the CCD camera 3 is displayed on the LCD 7 according to the video data D3 on a real time basis.

Furthermore, as the CPU 24 subsequently recognizes that the camera shutter button 6C is depressed under this condition, it controls the DSP 28 correspondingly. Then, the DSP 28 takes in the video data D3 of a still image of a frame picked up at the moment when the camera shutter button 6C is depressed according to the video signals S5 given to it from the CCD camera 3 and executes an image compression process on the video data D3 it takes in as in a camera mode.

Subsequently, the DSP 28 stores the compressed video data D4 obtained as a result of the image compression process in the flash memory 29 as the compressed video data D4 of the image that is picked up when the camera shutter button 6C is depressed and operates as a mark when retrieving the video data later (to be referred to as bookmark image hereinafter), relating it to the corresponding position of the compressed audio data D2 that are sequentially stored in the flash memory 29.

Subsequently, as the CPU 24 recognizes that the stop button 6F is depressed, it generates a new matters-of-concern folder in the folder selected by the user. Then, it contains an audio file containing the compressed audio data D2 and the video files of the compressed video data D4 in the matters-of-concern folder and subsequently stores the management information of the matters-of-concern folder in the management file MSF.

In this way, the camera-equipped IC recorder 1 can not only record sounds and still images independently but also relates the still images to the sounds being recorded and stores them as bookmark images.

Then, with the camera-equipped IC recorder 1, it is possible to detect a desired matters-of-concern folder and a desired sound position in the matters-of-concern folder, utilizing the bookmark images that are related with sounds and recorded.

More specifically, when the CPU 24 recognizes that the jog lever 6E is depressed and a display instruction for displaying a selection image for selecting a desired matters-of-concern folder (to be referred to as a matters-of-concern folder selection image or a selection image for selecting a desired bookmark image in the matters-of-concern folder (to be referred to as bookmark image selection image hereinafter) in a desired folder, it causes the LCD 7 to display a matters-of-concern folder selection image 32 as shown in FIG. 5 or a bookmark image selection image 33 (FIG. 5) similar to a matters-of-concern folder 32.

When the CPU 24 has the LCD 7 display a matters-of-concern folder selection image 32, it reads out the video file (compressed video data D4) of a preselected representative bookmark image (to be referred to as representative image hereinafter) for each of the matters-of-concern folders in the folder from the flash memory 29 and has the DSP 28 decode it and prepares predetermined thumbnail images P₁ through P₆ of a predetermined size according to the obtained video data D3.

Then, the CPU 24 displays a list of the thumbnail images P₁ through P₆ for each of the obtained matters-of-concern folders in the matters-of-concern folder selection image 32. Note that, at this time, not thumbnail images but only an icon is displayed for a matters-of-concern folder of only sounds that does not contain any still image.

If subsequently the jog lever 6E is operated and one of the thumbnail images P₁ through P₆ is selected from the matters-of-concern folder selection image 32, the CPU 24 reads out the audio file (compressed audio data D2) in the corresponding matters-of-concern folder according to the above-described management file MSF (FIG. 7) from the flash memory 29 and has the DSP 28 decode it.

As a result, the audio data D1 obtained by the decoding process are output from the DSP 28 and converted into analog data by the AD/DA converter 22. Then, the obtained audio signals S6 are given to the speaker 31 by way of the amplifier 30. Thus, the sounds corresponding to the given audio signals S6 are output from the speaker 31.

Similarly, when the CPU 24 has the LCD 7 display a bookmark image selection image 33 (FIG. 5), it reads out the video file (compressed video data D4) of each of the bookmark images in the corresponding matters-of-concern folder according to the management file MSF from the flash memory 29 and has the DSP 28 decode it. Then, it prepares thumbnail images P₁ through P₆ of a predetermined size according to the obtained video data D3. Thereafter, the CPU 24 displays a list of the thumbnail images P₁ through P₆ for each of the obtained bookmark images in the bookmark image selection image 33.

If subsequently the jog lever 6E is operated and one of the thumbnail images P₁ through P₆ is selected from the bookmark image selection image 33, the CPU 24 reads out the compressed audio data D2 starting from the point in the audio data associated with the original bookmark image of the thumbnail images P₁ through P₆ in the corresponding audio file from the flash memory 29 and has the DSP 28 decode them.

As a result, the audio data D1 obtained by the decoding process are output from the DSP 28 and converted into analog data by the AD/DA converter 22. Then, the obtained audio signals S6 are given to the speaker 31 by way of the amplifier 30. Thus, the sounds starting from the sound position that is associated with the bookmark image selected by the user from the selected matters-of-concern folder are output from the speaker 31.

In this way, the user of the camera-equipped IC recorder 1 can quickly and easily access the desired matters-of-concern folder or the desired sound position in the matters-of-concern folder on the basis of the representative image in the matters-of-concern folder or the bookmark images in the matters-of-concern folder. (1-3) directory structure of the data management format in the camera-equipped IC recorder 1

Now, the directory structure of the Voiscape Format that is the data management format of compressed audio data D2 and compressed video data D4 adopted in the camera-equipped IC recorder 1 will be described below.

FIG. 6 is a schematic illustration of the directory structure of the Voiscape Format that is adopted in the embodiment. As shown in FIG. 6, the audio file of the recorded sounds ("03072400.MSV") and the video files ("P0000000.JPG" through "P0000003.JPG) of the bookmark images that are related with the recorded sounds and recorded are stored in a folder "VOISCAPE" that is formed in the folder "MSSONY".

The folders ("FOLDER1" through "FOLDER3") that contains matters-of-concern folders are located in the "VOISCAPE" and the user can select a desired folder for storing the audio file of the recorded sounds out of these folders and prepare a new folder.

The "VOISCAPE" also contains the above-described management file MSF ("MSGLIST.MSF") for managing the prepared matters-of-concern folder. As shown in FIG. 7 that illustrates the structure of the management file MSF, it includes a header ("Header") of 32 bytes that describes the date (day, month, year), the clock time (second, minute, o' clock) and the day of the week when the management file MSF is edited last followed by folder entries ("Folder Entry") that describe the folder titles ("FOLDER1" through "FOLDER3"). Each of the folder entries is followed by message entries ("Message Entry") each of which describes the titles of the matters-of-concern folders formed in the folders and the dates when the matters-of-concern folders of the folder are formed.

With the Voiscape Format, when a new folder or a new matters-of-concern folder is prepared, the folder entry and the message entry that correspond to the folder and describe various pieces of management information are registered in the management file MSF without fail. As a result, with the Voiscape Format, it is possible to reliably and quickly detect the folder containing the desired matters-of-concern folder on the basis of the management file MSF.

Additionally, one or more than one matters-of-concern folders ("03072400" through "03072408" are prepared in each of the folders ("FOLDER1" through "FOLDER3") according to the situation where the user uses the editing apparatus. Then, each of the matters-of-concern folders is made to contain the audio file ("03072400.MSV") of the compressed audio data D2 that are obtained as a result of a sound recording operation, the video file ("P0000000.JPG" through "P0000003.JPG") of the compressed video data D4 of the bookmark images picked up during the recording operation and the image management file PIN ("03072400.PIN") for managing the corresponding image file. Note that the audio file has a file format same as that format of audio files that are adopted in conventional IC recorders.

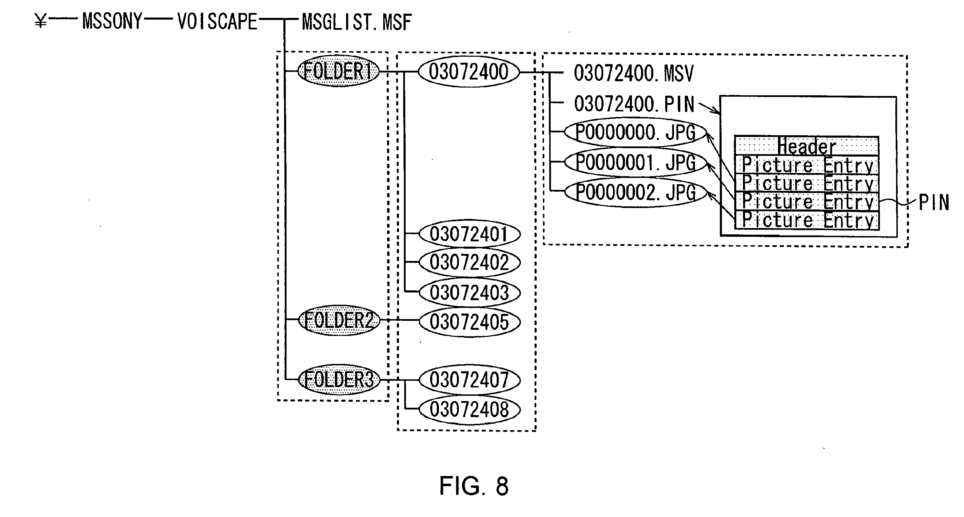

An image management file PIN has a data structure as shown in FIG. 8. More specifically, it includes a header ("Header") that describes the date (day, month, year), the clock time (second, minute, o' clock) and the day of the week when the image management file PIN is edited last, followed by plurality of picture entries ("Picture Entry").

The first picture entry describes the file title of the image file of the bookmark image that is specified as the representative image and the position (seconds, minutes, hours) corresponding to the audio file (audio data D1) of the bookmark image and so on. When a representative image is not specified, zero data is entered to all the rows of the first picture entry other than the picture ID to indicate that the region is the picture entry.

Each of the second and subsequent picture entries describes the file title of each of the video files of the bookmark images picked up during the recording operation of the corresponding sounds and the position (seconds, minutes, hours) of the bookmark image corresponding to the sounds. Since the second and subsequent picture entries are sequentially added to the ends of the respective video files of newly recorded bookmark images, the order of arrangement of the second and subsequent picture entries in the image management file PIN indicates the order of arrangement of the positions with which the video files are associated as viewed from the leading end of the corresponding sounds.

In this way, with the Voiscape Format, it is possible to detect the representative image of the matters-of-concern folder and the positions of the representative image and the other bookmark images corresponding to the sounds. Additionally, as an audio file and the video files of the bookmark images that are related to it are contained in a same folder (matters-of-concern folder), the relationship between the audio file and the video files can be recognized with ease when the data are taken into an external personal computer and viewed by means of an explorer so that consequently it is possible to effectively prevent the user from erasing the audio file and the video files by mistake.

### (2) Configuration of the matters-of-concern folder editing system 40 of this embodiment

### (2-1) Configuration of the matters-of-concern folder editing system

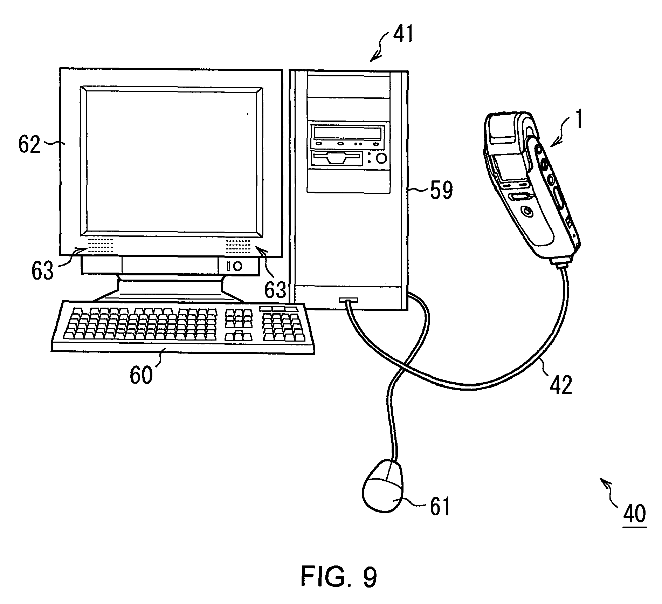

FIG. 9 is a schematic illustration of the configuration of the matters-of-concern folder editing system 40 of this embodiment that is adapted to be used when defining various settings for the camera-equipped IC recorder 1, adding or copying a matters-of-concern folder and viewing or editing the matters-of-concern folders stored in the camera-equipped IC recorder 1 by means of a personal computer. The matters-of-concern folder editing system 40 is established when the camera-equipped IC recorder 1 and the personal computer 41 are connected to each other by way of the USB cable 42.

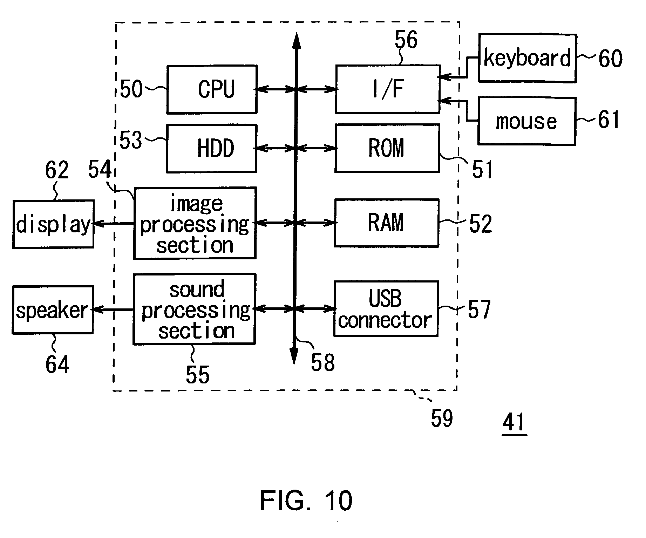

The personal computer 41 is a general purpose computer for family use. As shown in FIG. 10, the main body 59 of the personal computer 41 is formed as an entity when a CPU 50, a ROM 51 storing various programs, a RAM 52 that operates as work memory of the CPU 50, a hard disk drive 53 storing various pieces of application software, an image processing section 54 for executing signal processing operations on video data, a sound processing section 55 for executing signal processing operations such as digital/analog conversion on audio data, an interface 56 and a USB connector 57 are connected to each other by way of a bus 58. A keyboard 60 and a mouse 61 are connected to the interface 56 and a display 62 is connected to the image processing section 54, while a speaker 63 is connected to the sound processing section 55.

The hard disk drive 53 stores various pieces of application software that are installed from the CD-ROMs storing them and provided by the manufacturer of the camera-equipped IC recorder 1 and/or downloaded from the home page of the manufacturer by way of a network such as the Internet by the user and providing the feature of viewing or editing matters-of-concern folders as described above (to be referred to as matters-of-concern folder editing application programs hereinafter).

As the keyboard 60 and the mouse 61 are operated and a command for starting a matters-of-concern folder editing application program is input, the CPU 50 reads out the matters-of-concern folder editing application program from the hard disk drive 53 and develops it in the RAM 52.

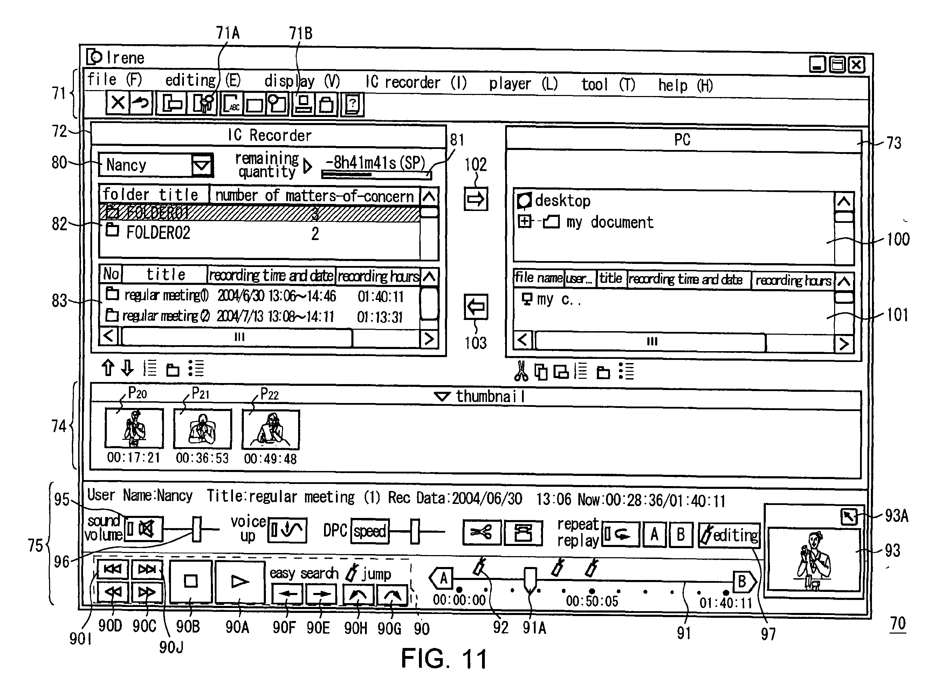

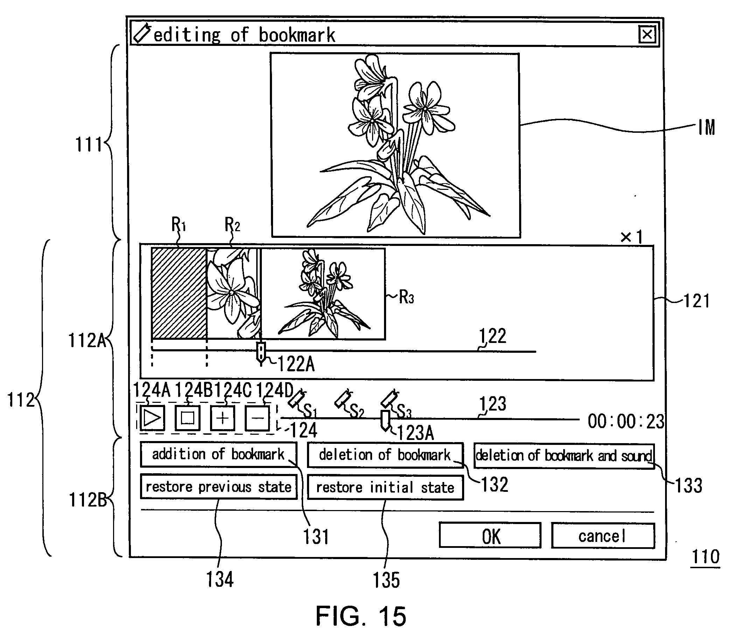

Additionally, whenever necessary, the CPU 50 has the display 62 display any of various GUI (graphical user interface) such as a main window 70 (FIG. 11) or an editing window (FIG. 15), which will be described in greater detail hereinafter, by controlling the image processing section 54 and communicates with the camera-equipped IC recorder 1 connected to it by way of the USB connector 57 to write file data to or read file data from any of the matters-of-concern folders or the management file MSF and defines various settings for the camera-equipped IC recorder 1 according to the user operations.

Still additionally, when the CPU 50 reads out file data from any of the matters-of-concern folders of the camera-equipped IC recorder 1 or the management file MSF, it gives the data of the video file of the corresponding bookmark image in the matters-of-concern folder (to be referred to simply as video file data hereinafter) or the predetermined management data corresponding to the file data in the management file, whichever appropriate, to the image processing section 54 so as to have the display 62 display the image corresponding to the video file data or the management data and the management information at the corresponding position in the GUI that is displayed on the display 62. Furthermore, whenever necessary, the CPU 50 gives the file data in the any of the audio files in the matters-of-concern folders it reads out from the camera-equipped IC recorder 1 (to be referred to simply as audio file data hereinafter) to the sound processing section 55 so as to have the speaker 31 output the sounds corresponding to the audio file data.

### (2-2) Configuration of the main window 70

When a matters-of-concern folder editing application program is started, the CPU 50 communicates with the camera-equipped IC recorder 1 by way of the USB cable 42 to read out file data from the management file MSF (FIG. 7) of the camera-equipped IC recorder 1 and subsequently controls the image processing section 54 according to the file data of the management file MSF to have the display 62 display the main window 70 as shown in FIG. 11.

The main window 70 includes a tool bar 71, an IC recorder information display section 72, a personal computer information display section 73, a thumbnail display section 74 and a player section 75. The tool bar 71 shows items such as "file", "editing", "display" and so on and icons that can be used with the matters-of-concern folder editing application program.

Then, the user can display any of a number of predetermined setting windows (not shown) so as to make it overlapping with the main window 70 by clicking one of the icons 71A that correspond to the IC recorder setting features shown on the tool bar 71. Thus, the user can define various settings for the camera-equipped IC recorder 1, using the setting window.

The IC recorder information display section 72 includes a device selection combo box 80, a remaining quantity display section 81, a folder information display section 82 and a matters-of-concern folder display section 83. The user name registered in the camera-equipped IC recorder 1 and the machine type of the camera-equipped IC recorder 1 that are read out from the camera-equipped IC recorder 1 are displayed on the uppermost row, while the remaining recordable time of the camera-equipped IC recorder 1 is displayed in the remaining quantity display section 81.

Additionally, the IC recorder information display section 72 displays the folder titles ("FOLDER1" through "FOLDER4" in FIG. 6) defined in the camera-equipped IC recorder 1 and the number of matters-of-concern folders contained in each of the folders in the folder information display section 82 according to the file data in the management file MSF (FIG. 7) read out from the camera-equipped IC recorder 1.

As the user selects the desired one of the folders being displayed in the folder information display section 82 of the IC recorder information display section 72 by operating the mouse, a list including the folder title, the time and date of recording, the recording hours and other predetermined pieces of information of each of the folders contained in the folder are displayed as text in the matters-of-concern folder display section 83.

The list displayed as text in the folder information display section 82 of the IC recorder information display section 72 may be replaced by a list of the thumbnail images P₁₀ through P₁₂ of the representative images of the matters-of-concern folders registered in the folder selected in the folder information display section 82 of the IC recorder information display section 72 as shown in FIG. 1-2 by changing the setting of the folder information display section 82.

Then, the user can select the desired one of the matters-of-concern folders being displayed as text information or as thumbnail images P₁ through P₁₂ in the matters-of-concern folder display section 83 by operating the mouse. As one of the matters-of-concern folders is selected, the thumbnail images P₂₀ through P₂₃ of the bookmark images in the matters-of-concern folder are displayed in the thumbnail display section 74 as a list along with the time codes of the recorded sounds that are related with the bookmark images.

The user name defined in the matters-of-concern folder and file name of the matters-of-concern folder selected in the above-described manner, the recording time and date of the matters-of-concern folder and the current reproduced hours out of the total recording hours of the matters-of-concern folder are displayed on the uppermost row of the player section 75.

Additionally, as one of the matters-of-concern folders is selected in the above-described manner, the group of basic operation buttons 90 including a plurality of buttons 90A through 90J for carrying out basic operations that are arranged on the lowermost row of the player section 75 are displayed and activated. Then, the user can operate the matters-of-concern folder in various different ways by using any of the group of basic operation buttons 90 including a reproduction button 90A, a stop button 90B, a fast forward reproduction button 90C and a fast reverse reproduction button 90D. For example, the user can reproduce and stop the reproduction of the matters-of-concern folder or repeat a forward running and reproduction session of driving the matters-of-concern folder to move fast forward for 20 seconds and then reproduce it for 3 seconds or fast rewinding and reproduction session of driving the matters-of-concern folder to move fast backward for 20 seconds and then reproduce it for 3 seconds on the personal computer 41 by using appropriate ones of the group of basic operation buttons 90.

The group of basic operation buttons 90 additionally includes easy search buttons 90E, 90F, bookmark jump buttons 90G, 90H and matter-of-concern switch buttons 901, 90J. For example, the user can conduct a forward easy search operation of driving the matters-of-concern folder being reproduced on the personal computer 41 to run fast forward for 10 seconds and then return to the normal reproduction speed or a backward easy search operation of driving the matters-of-concern folder to run fast backward for 3 seconds and then return to the normal reproduction speed by clicking the easy search buttons 90E, 90F.

Additionally, the user can jump the position where the matters-of-concern folder is being reproduced on the personal computer 41 to the time code position with which to the immediately preceding or succeeding bookmark image is related by clicking the bookmark jump buttons 90G, 90H. Similarly, the user can switch the matters-of-concern folder to be reproduced to the immediately proceeding or succeeding matters-of-concern folder being displayed in the matters-of-concern folder display section 83 of the IC recorder information display section 72 by clicking the matters-of-concern switch buttons 90I, 90G.

Note that the user can also reproduce a matters-of-concern folder at the sound position related with the corresponding one of the thumbnail images P₂₀ through P₂₂ being displayed in the thumbnail d section 74 of the main window 70 on the personal computer 41 by double-clicking the thumbnail images P₂₀, P₂₁ or P₂₂ among the thumbnail images P₂₀ through P₂₂. Thus, the user can quickly access the desired position of the corresponding matters-of-concern folder by referring to the thumbnail images P₂₀ through P₂₂ displayed in the thumbnail display section 74.

On the other hand, a reproduction slider bar 91 is arranged to the right of the group of basic operation buttons 90. When one of the matters-of-concern folders is selected in a manner as described above, the first, middle and last time codes of the audio file contained in the matters-of-concern folder are displayed along and below the reproduction slider bar 91. If the matters-of-concern folder is being reproduced on the personal computer 41, a slider 91A is displayed on the slider bar 90 so as to move rightward to correspond to the current position of reproduction in the matters-of-concern folder.

Additionally, bookmark-shaped marks (to be referred to simply as bookmarks hereinafter) 92 are displayed at respective time code positions with which the bookmark images in the matters-of-concern folder are related above the reproduction slider bar 91.

When the slider 91 passes by one of the time code positions where the bookmarks 92 are displayed while the matters-of-concern folder is being reproduced (and hence the position of reproduction of the audio folder passes by the time code position related with one of the bookmark images), the corresponding bookmark 92 is emphasized in red, for example, and at the same time, the thumbnail image that corresponds to the bookmark 92 (the bookmark image that is related with the time code) in the thumbnail images P₂₀ through P₂₂ that are being displayed in the thumbnail display section 74 is also emphasized by a red frame, for example, while the time code being displayed below the thumbnail image P₂₀, P₂₁ or P₂₂ is emphasized in red. Thus, the user can easily recognize the current position of reproduction in the entire matters-of-concern folder by seeing the emphasized images.

Additionally, the original bookmark image of the thumbnail image P₂₀, P₂₁, or P₂₂ that is associated with the bookmark 92 emphasized in red among the thumbnail images P₂₀ through P₂₂ being displayed in the thumbnail display section 74 (and hence the bookmark image related with the time code of the audio folder) is displayed in the picture window 93 arranged to the right of the reproduction slider bar 91.

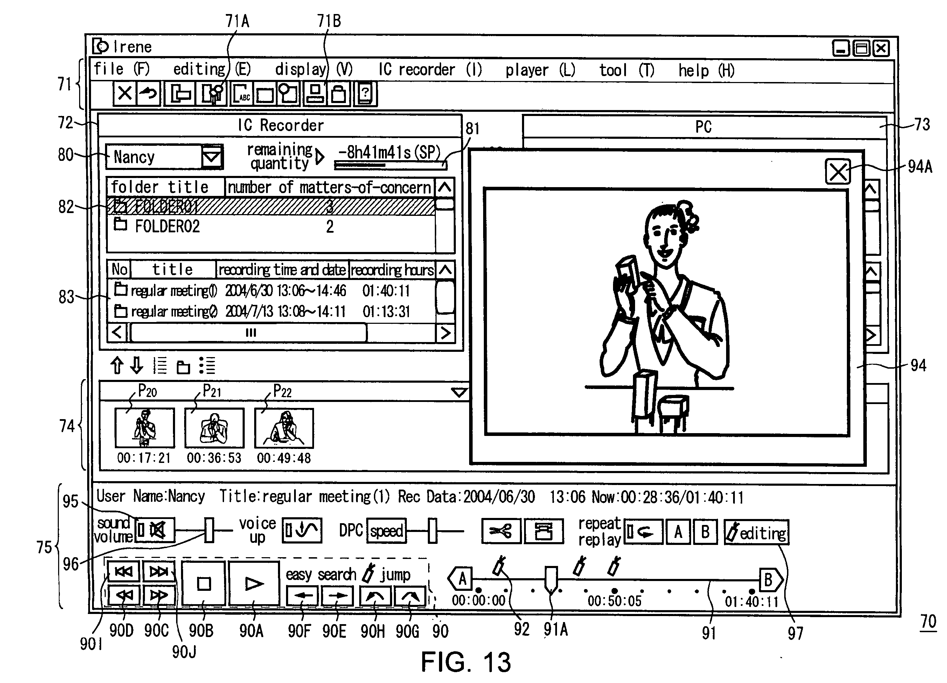

Then, the image being displayed in the picture window 93 can be separated from the main window 70, enlarged and moved to the picture window 94 as shown in FIG. 13 by clicking the enlargement button 93A arranged at the top right of the picture window 93 so that the user may visually confirm the details of the bookmark image. The picture window 94 can be closed and moved back to the picture window 93 as shown in FIG. 11 by clicking the closing button 94A arranged at the top right of the picture window 94.

Various operation buttons and several slider bars are arranged at the middle row of the player section 75. They include a mute button 95 for turning on/off the volume control at the time of reproducing a matters-of-concern folder and a slider bar 96 for controlling the volume. Thus, it is possible to make the player section 75 operate in various different ways by appropriately operating the buttons and the slider bars. Operations that can be done with the buttons and the slider bars include click and drag and drop.

Additionally, an editing button 97 is arranged at the right end of the middle row of the player section 75. The editing window (FIG. 15) can be placed on the main window 70 in an overlapping state by clicking the editing button 97. Then, the user can operate for editing the recorded sounds of the selected matters-of-concern folder stored in the audio file by using the editing window (FIG. 15) . For example, the user may shift the position of a part of the recorded sounds where a bookmark image is related.

On the other hand, the personal computer information display section 73 includes a folder information display section 100 and a file information display section 101. The folder information display section 100 hierarchically displays the folder structures of the folders in the personal computer 41. The file name and the time and date of each audio file of a predetermined format that the matters-of-concern folder editing application program can handle are displayed in the file information display section 101 out of the files contained in the folder specified from the folders being displayed in the folder information display section 100 according to a user operation.

Returning to the main window 70, the user can select a matters-of-concern folder from the matters-of-concern folders being displayed in the matters-of-concern folder information display section 83 of the IC recorder information display section 72 and also a folder from the folders being displayed in the folder information display section 100 of the personal computer information display section 73 and subsequently have the personal computer 41 read in the file data of the matters-of-concern folder selected in the IC recorder information display section 72 from the camera-equipped IC recorder 1 and stores a copy of the matters-of-concern folder in the folder of the personal computer 41 selected in the personal computer information display section 73 by clicking the storage button 102 that is arranged between the IC recorder information display section 72 and the personal computer information display section 73.

Conversely, in the main window 70, the user can select an audio file from the audio files being displayed in the file information display section 101 of the personal computer information display section 73 and a folder from the folders being displayed in the folder information display section 82 of the IC recorder information display section 72 and subsequently have the personal computer transfer the file data of the audio file selected in the personal computer information display section 73 to the camera-equipped IC recorder 1 and store it in the flash memory 29 (FIG. 4) in the camera-equipped IC recorder 1 by clicking the addition button 103 arranged between the IC recorder information display section 72 and the personal computer information display section 73. At this time, the file data of the audio file are stored in the matters-of-concern folder that is newly prepared in the folder selected in the IC recorder information display section 72 and the file data of the management file MSF (FIG. 7) are updated accordingly.

### (2-3) Configuration of the editing window

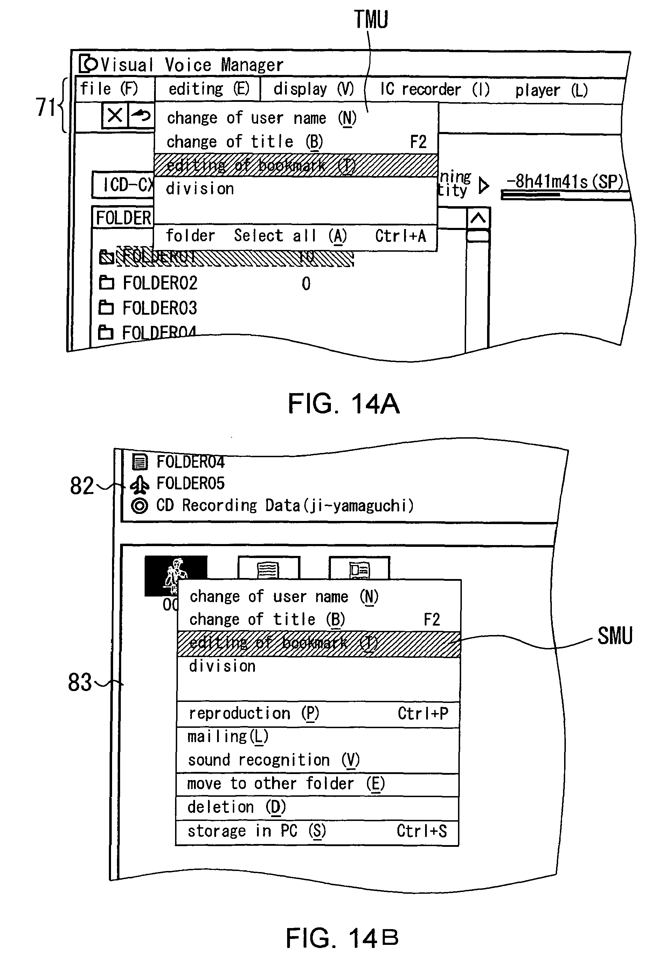

Additionally, when a desired matters-of-concern folder is selected from the folders being displayed in the folder information display section 83 and the item "bookmark editing" is selected from the tool menu TMU (FIG. 14A) that is displayed by clicking "editing" of the tool bar 71 or from the shortcut menu SMU (FIG. 14B) that is displayed by clicking the right side of the mouse or when the editing button 97 (FIG. 13) is clicked, the user can have an editing window 110 as shown in FIG. 15 displayed in the display 62 by communicating with the camera-equipped IC recorder 1 by way of the USB cable 42 so as to read out the file data that correspond to the selected matters-of-concern folder from the camera-equipped IC recorder 1 and subsequently controlling the image processing section 54 according to the file data.

The editing window 110 includes an image display section 111 arranged at a top part of the window and an editing player 112 that by turn includes an editing position operating section 112A arranged at a middle part of the window and an editing contents determining section 112B arranged at a bottom part of the window.

An rectangular oblong frame 121 is arranged in the editing position operating section 112A of the editing player 112 to occupy a top part and a middle part thereof that are located at the center of the editing window 110 and a first reproduction slider bar 122 is arranged in lower part of the frame 121, while images (to be referred to as reduced bookmark images hereinafter) R₁ through R₃ that are obtained by reducing the bookmark images of the matters-of-concern folder selected from the folder information display section 83 typically to a size of 60 pixels x 80 pixels are displayed in the space between the top end of the frame 121 and the reproduction slider bar 122 at the respective time code positions that are related with the bookmark images.

A second reproduction slider bar 123 is arranged in a bottom part of the editing position operating section 112A. The bookmarks S₁ through S₃ of the matters-of-concern folder that is selected from the folder information display section 83 are arranged above the second reproduction slider bar 123 at the respective time code positions that are related with the bookmark images and, at the same time, the currently reproduced hours of the total recording hours is displayed at the right of the second reproduction slider bar 123.

A group of operation buttons 124 that include a reproduction button 124A, a reproduction stop button 124B, a slider bar enlargement button 124C and a slider bar reduction button 124D is arranged to the left of the second reproduction slider bar 123. Thus, the matters-of-concern folder selected from the folder information display section 83 can be reproduced or the ongoing reproduction of the matters-of-concern folder can be stopped by clicking the reproduction button 124A or the reproduction stop button 124B, whichever appropriate.

As the matters-of-concern folder is reproduced, the slider 122A of the first reproduction slider bar 122 and the slider 123A of the second reproduction slider bar 123 are moved in the direction of reproduction. When the sliders pass by one of the time code positions that are associated with the respective bookmarks S₁ through S₃, the corresponding bookmark S is emphasized in red and, at the same time, the reduced bookmark image R that corresponds to the bookmark (time code) S among the reduced bookmark images R₁ through R₃ is also emphasized by a red frame, while the image IM that is obtained by enlarging the image size typically to 150 pixels x 200 pixels from the reduced bookmark image R is displayed at the center of the image display section 111 in the top part of the window.

In the editing position operating section 112A, the first slider bar 122 can be enlarged or reduced by clicking the slider bar enlargement button 124C or the slider bar reduction button 124D, whichever appropriate.

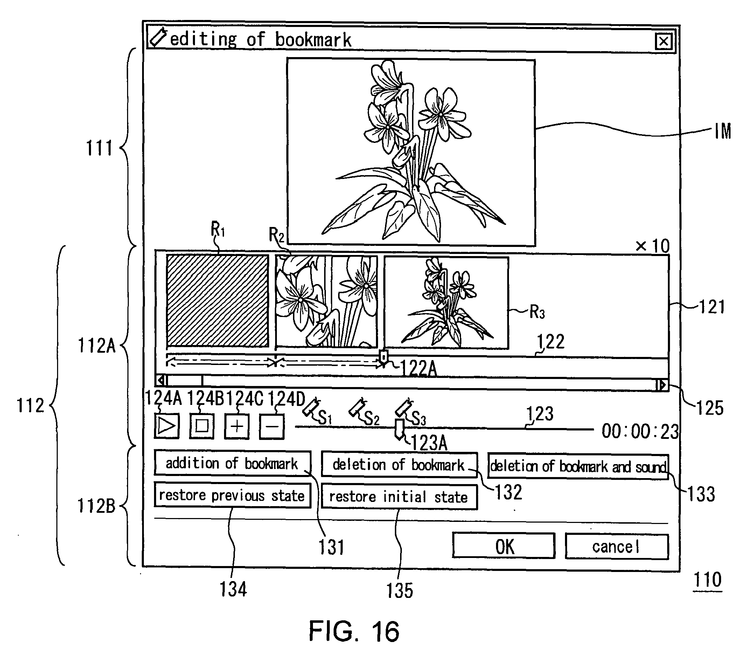

As the first reproduction slider bar 122 is enlarged, a scroll bar 125 is displayed along the bottom end of the frame 121 as shown in FIG. 16 and, at the same time, the slider bar enlargement ratio is displayed at the right top of the frame 121 and incremented stepwise from the initial value [x 1] (FIG. 15) according to the number of operations of clicking the reproduction slider bar enlargement button 114C. In FIG. 16, [x 10] is displayed as an example.

Thus, the gaps separating the reduced bookmark images R₁ through R₃ can be enlarged by raising the slider bar enlargement ratio if the reduced bookmark images R₁ through R₃ are displayed in an overlapping state in the editing position operating section 112A (FIG. 15) so that the user may visually confirm the entire reduced bookmark images R.

In this way, the reduced bookmark images R₁ through R₃ are displayed relative to the first reproduction slider bar 122 in the editing position operating section 112A so that the user can finely grasp the position where each bookmark image is related with the corresponding recorded sound according to the audio file in the matters-of-concern folder. Conversely, the bookmarks S₁ through S₃ are displayed at absolute positions relative to the second slider bar 123 so that the user can grasp the current position of reproduction in the entire recorded sounds.

Additionally, the positions of the bookmark images related to the respective recorded sounds according to the audio file in the matters-of-concern folder can be shifted in the editing position operating section 112A by individually moving the reduced bookmark images by drag and drop.

When the reduced bookmark image R₃ is selected out of the reduced bookmark images R₁ through R₃ and the mouse is held in a depressed state while the mouse cursor is put to the reduced bookmark image R₃ in order to move it, operation-indicating pointers 126 including triangular pointers 126A, 126B to be used for indicating a moving direction and an elliptic pointer 126C for releasing the reduced bookmark image R from the state of being moved are displayed at the center of the reduced bookmark image R₃ in place of the mouse cursor and, at the same time, the reduced bookmark image R₃ becomes movable. Under this condition, the user can shift the position of the bookmark image that corresponds to the reduced bookmark image R₃ and is related with a recorded sound by dragging the reduced bookmark image R₃ to the desired position and dropping it, confirming, if necessary, the position of the bookmark image by means of the first reproduction slider bar 122, the second reproduction slider bar 123 and the reproduced hours.

If the user does not know the position to which the bookmark image is to be moved, he or she can reproduce the recorded sounds to confirm the position to be shifted and then actually shift the position of the bookmark image that corresponds to the reduced bookmark image R₃ and is related with the recorded sound by dragging and dropping the reduced bookmark image R₃ to the position at the time when he or she confirms the position.

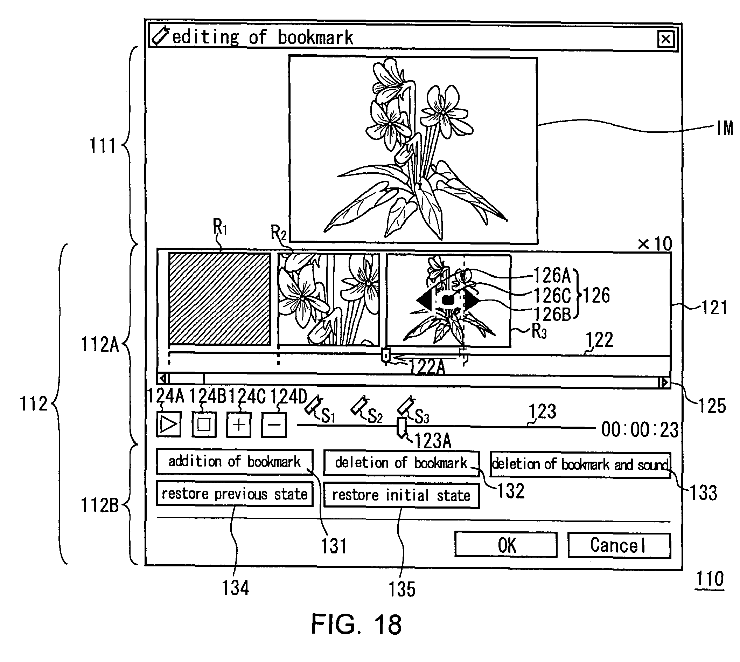

In such a case, the reproduction of the recorded sounds is stopped at the time when the operation-indicating pointers 126 are displayed in the editing position operating section 112A as shown in FIG. 18. At the same time, the slider 122A returns to the time code position that corresponds to the reduced bookmark image R₃ where the operation-indicating pointers 126 are displayed and the time code is switched to the reproduced hours. Thereafter, the slider 122A moves, following the motion of dragging the reduced bookmark image R₃ and, when the reduced bookmark image R₃ is dropped, the recorded sounds are reproduced from the dropped position and the slider 122A moves in the direction of reproduction. As a result, the user can check if the dropped position is the desired position to be shifted or not immediately after the drop of the reduced bookmark image R₃.

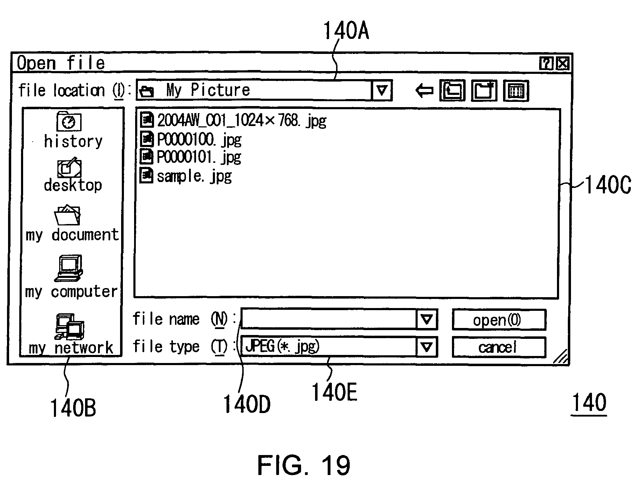

On the other hand, a "bookmark addition" button 131 is arranged in the editing contents determining section 112B of the editing player 112 so as to be used when newly adding an image as bookmark image to the existing bookmark images that are related with the respective recorded sounds. As the "bookmark addition" button 131 is clicked, a message window (not shown) that contains a message of asking the user "Add a image as bookmark?", a "yes" button and a "no" button is displayed. Then, if the "yes" button is clicked, an image selection dialog box 140 as shown in FIG. 19 is displayed in the editing window 110.

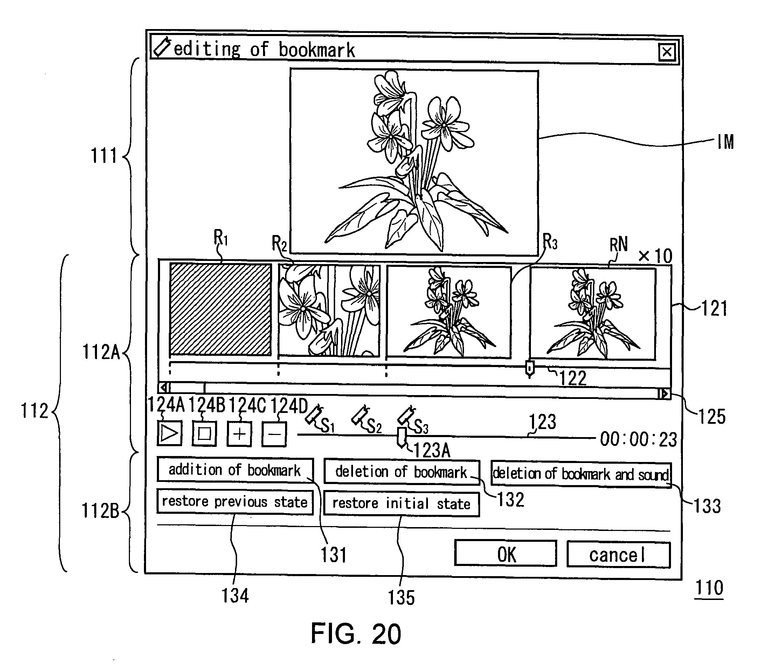

The image selection dialog box 140 contains a pull-down type image file location selecting section 140A, an icon type image file location selecting section 140B, an image file selecting section 140C, a pull-down type image file name selecting section 140D and a pull-down type image file format selecting section 140E. As one of the image files displayed in the image file selecting section 140C is selected and the "OK" button is clicked, an image of the selected image file is displayed as new reduced bookmark image R_{N} above the first reproduction slider bar 122 at a position corresponding to the time code position where the slider 122A is located as shown in FIG. 20. If a reduced bookmark image R is already displayed at the time code position, the new reduced bookmark image R_{N} is displayed near the time code position.

A "deletion of bookmark" button 132 and a "deletion of bookmark and sound" button 133 are arranged in the editing contents determining section 112B. As the "deletion of bookmark" button 132 is clicked when one of the reduced bookmark images R₁ through R₃ is selected as object of deletion, the selected reduced bookmark image R is deleted from the editing window 110. Similarly, as the "deletion of bookmark and sound" button 133 is clicked, the selected reduced bookmark image R and the sounds down to the next reduced bookmark image R are deleted from the editing window 110.

Additionally, a "restore previous state" button 134 for restoring the immediately preceding edited contents and a "restore initial state" button 135 for restoring the initial state of the edited contents are also arranged in the editing contents determining section 112B. Thus, the editing operation can be repeated as many times as the user wants by using the "restore previous state" button 134 and/or the "restore initial state" button 135.

The edited state is finalized and the corresponding matters-of-concern folder is updated by clicking the "OK" button arranged in the editing contents determining section 112B.

In this way, various editing processes can be executed by using the editing window 110 (FIG. 15) of the matters-of-concern folder editing system 40.

### (2-4) Editing process routine

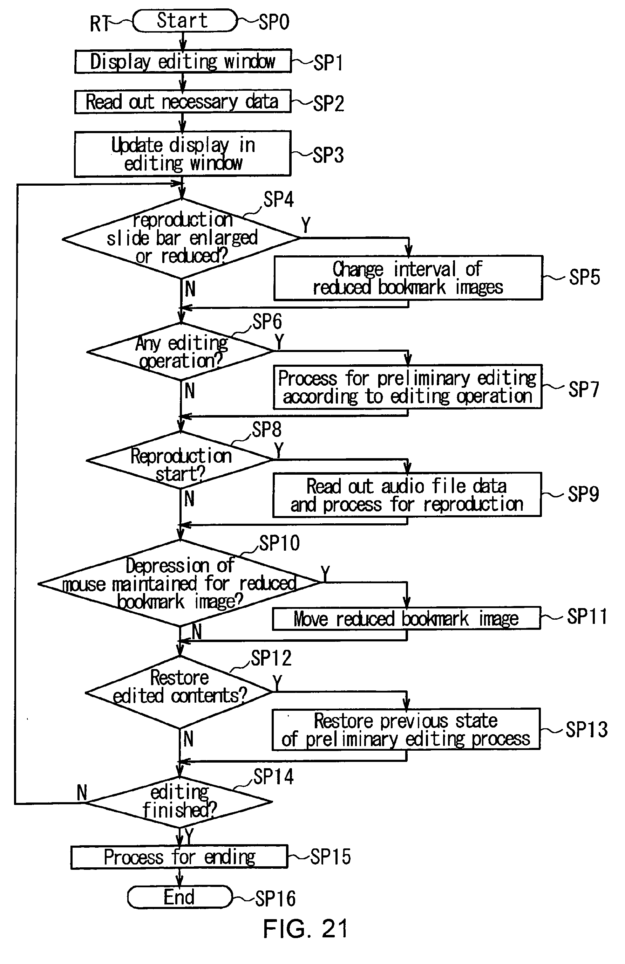

The CPU 50 of the personal computer 41 (FIG. 10) executes an editing process as described above, following the editing process routine RT as illustrated in FIG. 21.

When a desired matters-of-concern folder is selected from the folders being displayed in the folder information display section 83 and the item "bookmark editing" is selected from the tool menu TMU (FIG. 14A) that is displayed by clicking "editing" on the tool bar 71 or from the shortcut menu SMU (FIG. 14B) that is displayed by clicking the right side of the mouse or the editing button 97 (FIG. 13) is clicked, the CPU 50 starts the editing process routine RT at Step SPO. Then, in the next step, or Step SP1, the CPU 50 has the editing window 110 (FIG. 15) displayed.

Then, the CPU 50 proceeds to Step SP2, where it accesses the camera-equipped IC recorder 1 to which the USB is connected and reads out the file data of all the video files in the corresponding matters-of-concern folder, the file data of the image management file PIN (FIG. 8) and the data of the message entry ("Message Entry") of the matters-of-concern folder in the management file MSF (FIG. 7).

Then, the CPU 50 proceeds to Step SP3, where it generates the video data of the reduced bookmark images R₁ through R₃ for the bookmark images and the video data of the bookmarks S₁ through S₃ according to the file data of the video files in the matters-of-concern folder acquired in Step SP2, and gives those data to the image processing section 54.

Additionally, in Step SP3, the CPU 50 controls the image processing section 54 according to the image management file PIN in the matters-of-concern folder acquired in Step SP1 and has the reduced bookmark images R₁ through R₃ displayed at the respective corresponding time code positions associated with the bookmark images between the top side of the first reproduction slider bar 122 and the top end of the frame 121, while it also has the bookmarks S₁ through S₃ displayed above the second reproduction slider bar 123.

Then, in Step SP4, the CPU 50 determines if the slider bar enlargement button 124C or the slider bar reduction button 124D is clicked or not. If it is determined that either of the buttons is clicked, the CPU 50 proceeds to the next step, or Step SP5, where it determines enlargement ratio relative to the first reproduction slider bar 122 according to the number of times by which the slide bar enlargement button 124C and/or the slider bar reduction button 124D is clicked and changes the size of the first reproduction slider bar 122 according to the determined enlargement ratio to change the gaps separating the reduced bookmark images R₁ through R3 and the display of the slider bar enlargement ratio to the top right of the frame 121, while it has the scroll bar 125 (FIG. 16) displayed along the lower end of the frame 121.

Then, in the next step, or Step SP6, the CPU 50 determines if the "deletion of bookmark" button 132 or the "deletion of bookmark and sound" button 133 is clicked or not in a state where the "addition of bookmark" button 133 is clicked or any of the reduced bookmark images R₁ through R₃ is selected as object of deletion. If either of them is clicked, the CPU 50 proceeds to the next step, or Step SP7 and executes a corresponding preliminary editing process.

More specifically, if the "addition of bookmark" button 131 is clicked in the preliminary editing process, the CPU 50 has the user select the corresponding video file by way of the image selection dialog box 140 (FIG. 19) and, when the video file is selected, has the image according to the file data of the video file displayed at a predetermined position above the second reproduction slider bar as reduced bookmark image R_{N} (FIG. 20). If, on the other hand, the "deletion of bookmark" button 132 or the "deletion of bookmark and sound" button 133 is clicked, it deletes only the selected reduced bookmark image R or the reduced bookmark image R and the recorded sounds down to the next reduced bookmark image R from the editing window 110.

Additionally, in the next step, or Step SP8, the CPU 50 determines if the reproduction button 124A is clicked or not and, if it is determined that reproduction button 124A is clicked, it proceeds to the next step, or Step SP9, where it has the sound processing section 55 (FIG. 10) execute a reproduction process by supplying the latter with the file data of the audio file in the corresponding matters-of-concern folder that is read out from the camera-equipped IC recorder 1 in a manner as described above. As a result, the sounds according to the file data of the audio file are output from the speaker 63.

Then, the CPU 50 moves the slider 122A and the slider 123A in the direction of reproduction by respective distances that correspond to the reproduced hours and, when they pass by the time code position associated with one of the bookmarks S₁ through S₃, the CPU 50 emphasizes the display of the bookmark S and that of the corresponding reduced bookmark image R and displays the enlarged image IM of the reduced bookmark image R in the image display section 111 in the top part of the window.

Additionally, in the next step, or Step SP10, the CPU 50 determines if the mouse is kept being depressed for the reduced bookmark image R or not. If it is determined that the mouse is kept being depressed, the CPU 50 proceeds to the next step, or Step SP11, where it executes a move process on the reduced bookmark image R for which the mouse is held to be depressed.

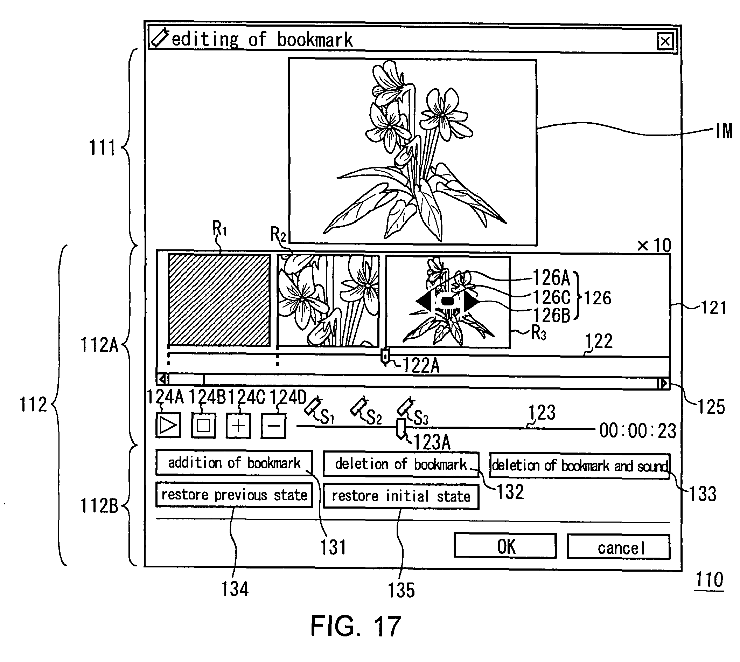

More specifically, if the above-described reproduction process is being executed, the CPU 50 displays the operation-indicating pointers 126 (FIG. 17) in the reduced bookmark image R for which the mouse is kept being depressed and temporarily suspends the ongoing reproduction process for the move process. Then, the CPU 50 returns the slider 123A to the time code position that corresponds to the reduced bookmark image R and at the same time switches the display of the time code to that of the reproduced hours. Thereafter, the CPU 50 moves the slider 122A so as to follow the reduced bookmark image R that is being dragged and resumes the temporarily suspended reproduction process in response to the operation of dropping the reduced bookmark image R. If, on the other hand, the above-described reproduction process is not being executed, the CPU 50 displays the operation-indicating pointers 126 (FIG. 17) in the reduced bookmark image R for which the mouse is kept being depressed and moves the slider 122A so as to follow the reduced bookmark image R that is being dragged.

Furthermore, in the next step, or Step SP12, the CPU 50 determines if either the "restore previous state" button 134 or the "restore initial state" button 135 is clicked or not. If either one of them is clicked, the CPU 50 proceeds to the next step, or Step SP13, where it restores the immediately preceding state of the edited contents that were temporarily edited in Step SP6 or the initial state.

Finally, in the next step, or Step SP14, the CPU 50 determines if the "OK" button or the "cancel" button is clicked in the editing contents determining section 112B or not.

If the answer to the question in Step SP14 is negative, the CPU 50 returns to Step SP4 and repeats the loop from Step SP4 to Step SP14 and back to Step S4 until the answer to the question in Step SP14 becomes positive.

If, on the other hand, the CPU 50 gets a positive answer in Step SP8, it proceeds to Step SP15 and, if the above reproduction process is being executed, it stops the reproduction process. Then, if the initial state is not restored for the temporary editing process, it updates the file data of the video file, the file data of the image management file PIN (FIG. 8) and the data of the message entry ("Message Entry" in FIG. 7) of the matters-of-concern folder in the management file MSF that are read out in Step SP2 and subsequently proceeds to Step SP16, where it ends the editing process routine RT.

In this way, the CPU 50 can perform various editing operations on the matters-of-concern folders stored in the camera-equipped IC recorder 1 in response to the upper operation that is conducted by way of the editing window 110 (FIG. 15).

### (3) Operation and advantages of the embodiment

With the above-described arrangement of the matters-of-concern folder editing system 40, the first reproduction slider bar 122 that indicates the current reproduction position of the sound information is displayed on the display 62 and, at the same time, the reduced images R produced by reducing the size of the bookmark images to a predetermined size are displayed at the respective sound positions (time code positions) with which the bookmark images are related along the first reproduction slider bar 122. Then, the reduced bookmark images R are moved in response to an operation for moving them along the first reproduction slider bar 122.

Therefore, in the matters-of-concern folder editing system 40, the reduced bookmark images R operate not only as markings but also as editing points so that the user can move any of them to the desired sound position in an intuitive and easy manner if compared with an operation of moving an icon. Thus, as a result, the user can accurately move any of the reduced bookmark images R if the current sound position is separated from the desired sound position only slightly.

Additionally, in the matters-of-concern folder editing system 40, the first reproduction slider bar 122 is displayed and the display magnitude can be changed at will by the user. Still additionally, the second reproduction slider bar 123, whose display magnitude is fixed, is also displayed along with the first reproduction slider bar 122.

Thus, in the matters-of-concern folder editing system 40, the user can grasp the all sound positions of the reduced bookmark images R by way of the second reproduction slider bar 123 and finely in detail by way of the first reproduction slider bar 122 so that the user can move any of the reduced bookmark images to the desired sound position in an intuitive and easy manner.

With the above-described arrangement, the first reproduction slider bar 122 that indicates the current reproduction position of the sound information and the reduced bookmark images R obtained by reducing the image size of the bookmark images to a predetermined size are displayed on the display 62 in such a way that the reduced bookmark images R are arranged at the respective sound positions (time code positions) related with the bookmark images along the first reproduction slider bar 122 and the reduced bookmark images R are moved in response to an operation of moving them along the first reproduction slider bar 122 so that the user can move any of them to the desired sound position in an intuitive and easy manner if compared with an operation of moving an icon. Thus, as a result, the operability of the system is remarkably improved.

### (4) Other embodiments

While the above embodiment of the present invention is described above in terms of application to a personal computer 41 of a matters-of-concern folder editing system 40, the present invention is by no means limited thereto and can be applied to any editing apparatus for editing sound information whose sound positions are related with images and management information for managing the image information of the images.

While the personal computer 41 and the camera-equipped IC recorder 1 are connected to each other by way of the USB cable 42 so that the matters-of-concern files stored in the camera-equipped IC recorder 1 can be edited on the personal computer 41 in the above description of the embodiment, the present invention is by no means limited thereto. For example, it may alternatively be so arranged that the flash memory 29 is removably fitted to the camera-equipped IC recorder 1 and hence can be mounted to the personal computer 41 and the matters-of-concern files stored in the flash memory 29 can be edited on the personal computer.

While the GUI for inputting various instructions and the editing window 110 are arranged in a manner as illustrated in FIG. 15 in the above-described embodiment, the present invention is by no means limited thereto and they may be arranged on many different ways for the purpose of the present invention.

While the marks displayed above the second reproduction slider bar 123 at respective positions that correspond to the sound positions related with the bookmark images are made to appear like so many bookmarks in the above-described embodiment, the present invention is by no means limited thereto and any other marks of any form may alternatively be used for the purpose of present invention.

While the slider 123A of the second reproduction slider bar 123 is made to move along the latter and pass by the time code positions that are related with respective bookmarks S₁ through S₃ that are displayed in red when a matters-of-concern folder is being reproduced and the reduced bookmark image R of the reduced bookmark images R₁ through R₃ that corresponds to the bookmark S is emphasized by a red frame in the above description of the embodiment, the present invention is by no means limited thereto. Any other technique for emphatically displaying the reduced bookmark image R may alternatively be used for the purpose of the present invention.

While the reduced bookmark images R obtained by modifying the image size of the original bookmark images and the image IM are displayed at predetermined respective positions in the above-described embodiment, the present invention is by no means limited thereto. For example, reduced bookmark images R obtained by enlarging an object in a part that needs to draw attention or turning it in each of them and the image IM may alternatively be arranged at predetermined respective positions.

While the immediately preceding edited part of the contents is restored by clicking the "restore previous state" button 134 in the above-described embodiment, the present invention is by no means limited thereto. For example, it may be so arranged that the number of times of editing operations may be stored and the selected number of times of editing operations may be restored by some means or another.

The present invention can find various applications in the field of recording and reproducing sounds and images as data.

It should be understood by those skilled in the art that various modifications, combinations, sub-combinations and alternations may occur depending on design requirements and other factors insofar as they are within the scope of the appended claims or the equivalents thereof.

## Claims

1. An editing apparatus for editing management information for managing a sound position of at least one image each related with a specified sound position of sound information, comprising
generation means for modifying a size of the image to a prescribed image size to generate a modified image;
display means for displaying a slider bar indicating a current reproducing position of the sound information and the modified image at the specified sound position along the slider bar;
input means for inputting an operation to move the modified image along the slider bar, the modified image being displayed by the display means; and
update means for updating the management information by changing the specified sound position of the image to a new sound position of the sound information related with the modified image, wherein
the display means is adapted to move the modified image in response to the operation.

2. The apparatus according to claim 1, further comprising
sound reproduction means for reproducing the sound information, wherein
the sound reproduction means is adapted to start reproduction of the sound information from the new sound position of the modified image determined by the operation.

3. The apparatus according to claim 1, wherein:
the slider bar is a first slider bar whose display magnitude can be changed desirably by user operation; and
the display means displays the first slider bar and a second slider bar whose display magnitude is fixed and also displays the modified image along the first slider bar.

4. The apparatus according to claim 1, wherein
the display means restores a previously displayed sound position or an initial sound position of the modified image from the new sound position determined by the operation, according to user operation.

5. An editing method for editing management information for managing a sound position of at least one image each related with a specified sound positions of sound information, the method comprising:
a first step of modifying a size of the image to a prescribed image size to generate a modified image;
a second step of displaying a slider bar indicating a current reproducing position of the sound information and the modified image at the specified sound position along the slider bar; and
a third step of inputting an operation to move the modified image being displayed, and updating the management information by changing the specified sound position of the image to a new sound position of the sound information related with the modified image, wherein
the second step is adapted to move the modified image in response to the operation.

6. The method according to claim 5, further comprising:
a sound starting step of starting reproduction of the sound information from the new sound position of the modified image determined by the operation.

7. The method according to claim 5, wherein:
the slider bar is a first slider bar whose display magnitude can be changed desirably by user operation; and
the second step is adapted to display the first slider bar and a second slider bar whose display magnitude is fixed and also to display the modified image along the first slider bar.

8. The method according to claim 5, wherein
the second step is adapted to restore a previously displayed sound position or an initial sound position of the modified image from the new sound position determined by the operation, according to user operation.

9. An editing apparatus for editing management information for managing a sound position of at least one image each related with a specified sound position of sound information, comprising
a generation unit operable to modify a size of the image to a prescribed image size in order to generate a modified image;
a display unit operable to display a slider bar indicating a current reproducing position of the sound information and the modified image at the specified sound position along the slider bar;
an input unit operable to input an operation to move the modified image along the slider bar, the modified image being displayed by the display means; and
an update means operable to update the management information by changing the specified sound position of the image to the new sound position of the sound information related with the modified image, wherein
the display unit is adapted to move the modified image in response to the operation.
